# EUROPEAN PATENT SPECIFICATION

(11) **EP 1 589 707 B1**
(45) Date of publication and mention of the grant of the patent: **17.12.2008**
(21) Application number: 04291070.3
(22) Date of filing: 22.04.2004
(51) Int. Cl.: H04L 12/56, H04M 11/06

(54) **Modem for coupling a network-unit to a device**
Modem zum Koppeln einer Netzwerkeinheit an ein Gerät
Modem pour coupler une unité réseau à un dispositif

(43) Date of publication of application: 26.10.2005
(73) Proprietor: Alcatel Lucent, 75008 Paris (FR)
(72) Inventor: Ooghe, Steven Maurice Joseph, 9000 Gent (BE); Pollet, Thierry, 2800 Mechelen (BE)
(74) Representative: Narmon, Gisèle Marie Thérèse

(56) References cited:
- WO-A-01/97446
- US-B1- 6 388 990

## Description

The invention relates to a modem for coupling a network-unit to a device and comprising a receiver for receiving first data from the network-unit and a transmitter for transmitting second data to the network-unit, which first data is destined for the device and which second data originates from the device.

The network-unit for example is a digital subscriber line access multiplexer or broadband remote access server, and the device for example is a personal computer.

A prior art modem is known from US 5,353,280, which discloses a calling modem and an answering modem. During an synchronisation mode, the modems evaluate the channel bandwidth, determine the reference times and identify modulation rates and center frequencies. The modems inform each other of these evaluations, these determinations and these identifications, and determine round-trip delays, echoes, frequency shifts, and settings. Then the modems transmit data to each other in a data exchangement mode. Later, through rate negotiations in an other synchronisation mode, adjustments may be made.

In networks, such as for example access networks or aggregation networks comprising network-units such as for example digital subscriber line access multiplexers and/or broadband remote access servers, network congestion may occur. The broadband remote access server may have an overview of the network topology; in such a case, the broadband remote access server may perform congestion avoidance in the downstream direction. This is referred to as "hierarchical scheduling", a technique introduced in Technical Report TR-059 of the Digital Subscriber Line Forum. Lower priority traffic is then intelligently discarded in order to avoid impact on higher priority traffic. In the upstream direction, the broadband remote access server cannot perform hierarchical scheduling to avoid congestion, but performs a disadvantageous predictive packet discarding algorithm.

The known modem is disadvantageous, inter alia, owing to the fact that the modem does not prevent network congestion and cannot respond to network congestion.

WO-A-01/97446 describes a mechanism for resolving congestion situations in the communication between two nodes through a network. An intermediate node monitors the queue of packets and adds an Explicit Congestion Notification (ECN) flag to the packets if the queue size gets too big. The ECN flag indicates to the receiving node that it reduces its data rate. Similarly, the receiving node adds the ECN flag to ACK packets so that the sending node is also informed.

It is an object of the invention, inter alia, to provide a modem as defined above, which reduces the chance on network congestion.

The modem according to the invention is characterised in that the modem comprises a detector for detecting at least one parameter of the first data and an adjustor for, in response to a detection result, adjusting at least one parameter of the second data for reducing a chance on network congestion.

By introducing the detector for detecting at least one parameter of the first data, which first data has been received from the network-unit and is destined for the device, the modem according to the invention can detect a first data capacity present in the network-unit, which first data capacity is available for the modem (in a first direction such as for example a downstream direction). By introducing the adjustor for, in response to a detection result, adjusting at least one parameter of the second data, which second data originates from the device and is to be transmitted to the network-unit, the modem according to the invention can adjust a second data capacity present in the modem, which second data capacity is destined for the network-unit (in a second direction such as for example an upstream direction). So, during a data exchangement mode, adjustments can be made, to reduce the chance on a network congestion in a network comprising the network-unit. As a result, sources that are able to adapt will do so as a result of the adjustments made in the modem during a data exchangement mode. At the same time, sources that are not able to adapt will continue to operate as required during a data exchangement mode, even in the absence of traffic prioritization mechanisms in the network-unit. Furthermore, there is no need to perform an other synchronization mode for rate negotiations. Both are great advantages.

The invention is based upon an insight, inter alia, that network congestion does not need to be solved through (rate) negotiations, and is based upon a basic idea, inter alia, that network congestion can be avoided by detecting the data traffic coming from that network-unit and in response adjusting the data traffic going to that network-unit.

It should be noted that the first data, which first data has been received from the network-unit and is destined for the device, and the second data, which second data originates from the device and is to be transmitted to the network-unit, are completely different from rate negotiation signals as exchanged in the synchronisation mode. Rate negotiation signals transmitted from the network-unit to the modem are not destined for the device, and rate negotiation signals transmitted from the modem to the network-unit do not originate from the device. The detection of at least one parameter of the first data corresponds with a detection and an analysis of the first data.

US 6,658,499 discloses a prior art modem for performing a bandwidth negotiation method in the synchronisation mode. US 6,587,473 discloses a prior art modem with carrier sense multiple access with collision detection, wherein the modulation method and signal bandwidth can be varied depending on errors, and wherein a ratio of upstream to downstream information packets can be varied depending on a buffer fill at the modem. Thereto, control frames are used. So, both US patents do not disclose a modem according to the invention, which modem individually detects (a parameter of) first data traffic coming from a source in a network-unit, and which modem, in response to a detection result, individually adjusts (a parameter of) second data traffic to be transmitted to that source in that network-unit, to reduce the chance on congestion in that network-unit.

An embodiment of the modem according to the invention is characterised in that the modem further comprises a calculator for calculating the at least one parameter of the second data as a function of the at least one parameter of the first data.

Such a calculator makes it possible to calculate more complex functions. The parameter of the second data is a function of the parameter of the first data, and may further be a function of further input signals, such as for example a modem mode and a modem time etc.

An embodiment of the modem according to the invention is characterised in that the at least one parameter of the first and second data comprises a bitrate.

The bitrate of the data can be easily detected and can be easily adjusted. Of course, other parameters are not to be excluded, such as for example modulation methods, bandwidths, delays etc.

An embodiment of the modem according to the invention is characterised in that the modem comprises a synchronisation mode for exchanging synchronisation information and a data exchangement mode for exchanging the first and second data and for detecting the at least one parameter of the first data and for adjusting the at least one parameter of the second data.

The synchronisation mode is a prior art mode. The data exchangement mode comprises the prior art exchangements of the first and second data and comprises the inventive detections and adjustments.

An embodiment of the modem according to the invention is characterised in that the at least one parameter of the second data is equal to or larger than a minimum value.

Such a minimum value makes it possible to guarantee, to the device, a transmission from the device to the network-unit based on a minimal parameter.

An embodiment of the modem according to the invention is characterised in that the at least one parameter of the second data is equal to or smaller than a maximum value.

Such a maximum value makes it possible to guarantee, to the network-unit, a transmission from the device to the network-unit based on a maximal parameter.

A embodiment of the modem according to the invention is characterised in that the at least one parameter of the second data is made substantially equal to the at least one parameter of the first data.

In this case, the second data and the first data are defined by the substantially same parameter. Two parameters are substantially equal in case their values differ less than 10%. Thereby, a delay between the parameters may be present.

An embodiment of the modem according to the invention is characterised in that the at least one parameter of the second data is made substantially equal to the at least one parameter of the first data between a minimum value and a maximum value.

In this case, the second data and the first data are defined by the substantially same parameter, as long as the parameter of the first data has a value between a minimum value and a maximum value. Otherwise, the parameter of the second data has a value equal to this minimum value or this maximum value. Two parameters are substantially equal in case their values differ less than 10%. Thereby, a delay between the parameters may be present.

The network-unit for example forms part of an access network and comprises a digital subscriber line access multiplexer or broadband remote access server, and the device for example forms part of a subscriber network and comprises a personal computer.

The broadband remote access server has an overview of the access network topology and may perform congestion avoidance in the downstream direction. Lower priority traffic is intelligently discarded in order to avoid impact on higher priority traffic. As a result, congestion will not occur in the downstream direction and low priority traffic sources will rate adapt to the value dictated by the broadband remote access server (e.g. using a transmission control protocol rate adaptation). In the upstream direction, the broadband remote access server cannot perform hierarchical scheduling to avoid congestion, but performs a disadvantageous predictive packet discarding algorithm. The modem according to the invention advantageously prevents such an algorithm to be used (too often). Alternatively, congestion avoidance is not performed in the dowstream direction, and packet discarding algorithms are not performed in the upstream direction. Instead, Quality of Service mechanisms are used in the access network that ensure that low priority traffic is discarded when required in order to avoid impact on higher priority traffic. This results in the same traffic behavior as described in the previous paragraph, but is not part of this invention.

The access network, in a minimal configuration, comprises an access unit, such as for example an access server and/or an access multiplexer comprising or coupled to the modem according to the invention. In a more advanced configuration, more access servers, more multiplexers, further units etc. may be present in the access network. The subscriber network, in a minimal configuration, just comprises a subscriber terminal comprising or coupled to the modem according to then invention. In a more advanced configuration, more terminals, routers, bridges etc. may be present in the subscriber network.

The invention also relates to a network-element comprising a modem for coupling a network-unit to a device, which modem comprises a receiver for receiving first data from the network-unit and a transmitter for transmitting second data to the network-unit, which first data is destined for the device and which second data originates from the device, which network-unit according to the invention is characterised in that the modem comprises a detector for detecting at least one parameter of the first data and an adjustor for, in response to a detection result, adjusting at least one parameter of the second data for reducing a chance on network congestion. Such a network-element according to the invention will usually but not exclusively be found in/near the subscriber network.

The invention yet also relates to a device comprising a modem for coupling the device to a network-unit, which modem comprises a receiver for receiving first data from the network-unit and a transmitter for transmitting second data to the network-unit, which first data is destined for the device and which second data originates from the device, which device according to the invention is characterised in that the modem comprises a detector for detecting at least one parameter of the first data and an adjustor for, in response to a detection result, adjusting at least one parameter of the second data for reducing a chance on network congestion.

The invention further relates to a method for coupling a network-unit to a device and comprising the steps of receiving first data from the network-unit and transmitting second data to the network-unit, which first data is destined for the device and which second data originates from the device, which method according to the invention is characterised in that the method comprises the steps of detecting at least one parameter of the first data and, in response to a detection result, adjusting at least one parameter of the second data for reducing a chance on network congestion.

The invention yet further relates to a processor program product for coupling a network-unit to a device and comprising the functions of receiving first data from the network-unit and transmitting second data to the network-unit, which first data is destined for the device and which second data originates from the device, which processor program product according to the invention is characterised in that the processor program product comprises the functions of detecting at least one parameter of the first data and, in response to a detection result, adjusting at least one parameter of the second data for reducing a chance on network congestion.

Embodiments of the network-unit according to the invention and of the device according to the invention and of the method according to the invention and of the processor program product according to the invention correspond with the embodiments of the modem according to the invention.

The invention solves the problem, inter alia, to provide a modem, which reduces the chance on network congestion, and is advantageous, inter alia, in that the access network can remain Quality of Service unaware, in that the access network in general and the broadband remote access server in particular do not need to be consulted for (rate) negotiations, and in that the data exchangement mode does not need to be interrupted by an other synchronisation mode.

These and other aspects of the invention will be apparent from and elucidated with reference to the embodiments(s) described hereinafter.
Fig. 1 shows in block diagram form a modem according to the invention for coupling a network-unit to a device;
Fig. 2 shows in block diagram form a first (access) network and a second (subscriber) network;
Fig. 3 shows in block diagram form a method according to the invention for determining a parameter of second data originating from a second network and destined for a first network, based on a parameter of first data originating from the first network and destined for the second network, a minimum value and a maximum value; and
Fig. 4 shows in the form of bitrates versus time a behaviour of the modem according to the invention.

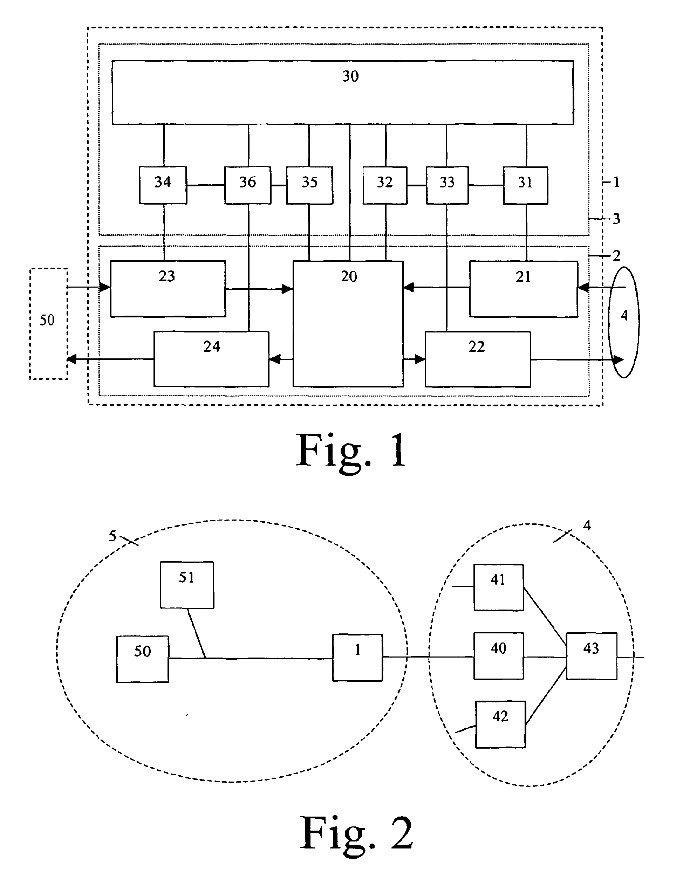

The modem according to the invention as shown in Fig. 1 comprises a switching circuit 2 and a controlling circuit 3. The switching circuit 2 comprises a first receiver 21 and a first transmitter 22 which are coupled to a first network 4 and to a coupler 20. The coupler 20 is coupled to a second receiver 23 and to a second transmitter 24 which are further coupled to a device 50 in a second network 5. The controlling circuit 3 comprises a processor system 30 coupled to the coupler 20, to a first detector 31, a first adjustor 32 and a first calculator 33, and to a second detector 34, a second adjustor 35 and a second calculator 36. The first detector 31 is further coupled to the first receiver 21 and to the first calculator 33, and the first adjustor 32 is further coupled to the coupler 20 and to the first calculator 33. The first calculator 33 is further coupled to the first transmitter 22. The second detector 34 is further coupled to the second receiver 23 and to the second calculator 36, and the second adjustor 35 is further coupled to the coupler 20 and to the second calculator 36. The second calculator 36 is further coupled to the second transmitter 24.

The first network 4 and the second network 5 are shown in Fig. 2. The first network 4, such as for example an access network, comprises a modem, such as for example a Digital Subscriber Line (DSL) modem, forming part of a network-unit 40, such as for example a Digital Subscriber Line Access Multiplexer (DSLAM). The DSLAM 40 is further coupled to a server 43, such as for example a Broadband Remote Access Server (BRAS), possibly via switches not shown. The BRAS 43 is further coupled to further network-units 41 and 42, such as for example DSLAMs. The second network 5, such as for example a subscriber network, comprises the modem 1, such as for example a Digital Subscriber Line (DSL) modem, coupled to a device 50 (terminal) and to a device 51 (terminal), such as for example computers. The modem 1 according to the invention forms part of the second network 5, with the first network 4 comprising a prior art modem included in the network-unit 40.

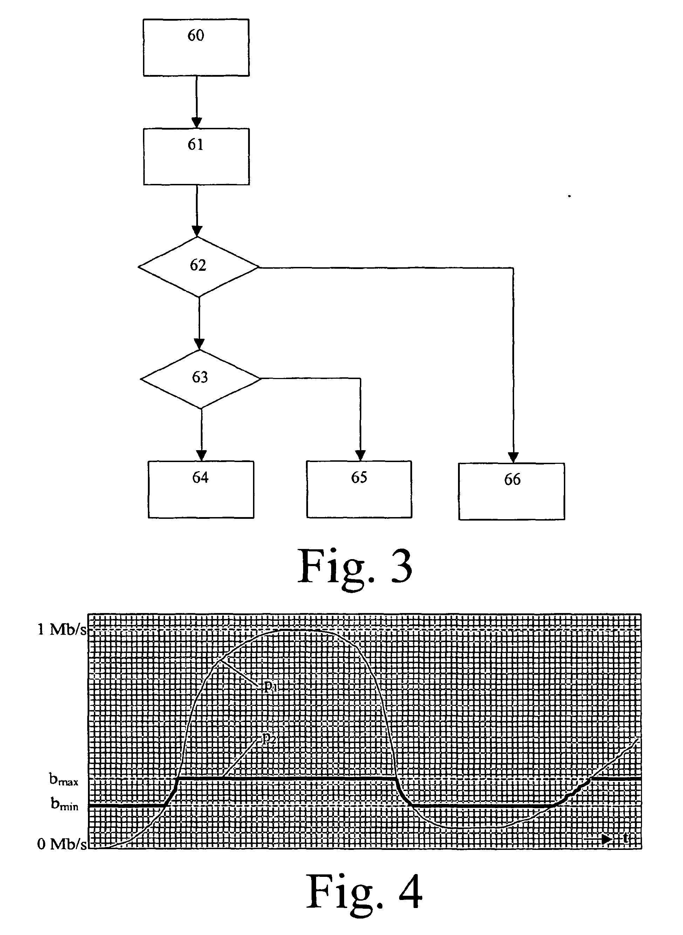

The method according to the invention as shown in Fig. 3 for coupling the network-unit 40 to the device 50 comprises the blocks 60-66. These blocks 60-66 have the following meaning:
Block 60: Start, goto block 61.
Block 61: Detect a parameter p₁ in first data originating from the network-unit 40 and destined for the device 50, goto block 62.
Block 62: Is this parameter p₁ equal to or smaller than a maximum value bₘₐₓ ? If yes, goto block 63, if no, goto block 66.
Block 63: Is this parameter p₁ equal to or larger than a minimum value bₘᵢₙ ? If yes, goto block 64, if no, goto block 65.
Block 64: A parameter p₂ of second data originating from the device 50 and destined for the network-unit 40 gets the value of the detected parameter p₁ of the first data.
Block 65: A parameter p₂ of the second data gets the minimum value bₘᵢₙ.
Block 66: A parameter p₂ of the second data gets the maximum value bₘₐₓ.

The behaviour as shown in Fig. 4 of the modem 1 according to the invention discloses the parameter p₁ of the first data, such as for example a downstream bitrate, and discloses the parameter p₂ of the second data, such as for example an upstream bitrate. The downstream bitrate p₁ fluctuates between 0 Mb per second and the downstream bitrate negotiated during the syncrhonization mode (for example 1 Mb per second). The upstream bitrate p₂ is adjusted in such a way that it is made equal to the downstream bitrate p₁ within a minimum value bₘᵢₙ (for example 90 kb per second) and a maximum value bₘₐₓ (for example 128 kb per second). Of course, only in case of second data needing to be transmitted, the upstream bitrate p₂ is to be adjusted.

The operation of the modem 1 according to the invention in view of the Fig. 1-4 is as follows. In a data exchangement mode, the first data originating from the first network 4 arrives at the first receiver 21. Via coupler 20, under control of the processor system 30, this first data is switched to the second transmitter 24. The second transmitter 24 transmits this first data to for example the device 50 (terminal). A parameter p₁ of the first data is detected by the first detector 31. The first detector 31 informs the calculator 33 of the detection result, and the calculator 33 calculates a parameter p₂ for the second data originating from for example the device 50 (terminal) in the second network 5 and arriving at the second receiver 23. The calculator 33 informs the adjustor 32 of the calculation result, and the adjustor 32 adjusts the parameter p₂ of the second data by supplying an adjustment signal to a prior art adaptor present in the coupler 20. Then, the second data is switched via the coupler 20, under control of the processor system 30, to the first transmitter 22. The first transmitter 22 transmits the second data to the DSLAM 40 in the first network 4.

In a most simple embodiment, the calculator 33 can be avoided, and the detector 31 and the adjustor 32 decide whether the parameter p₂ of the second data gets the minimum value bₘᵢₙ, the maximum value bₘₐₓ, or a value in between as shown in Fig. 3. In a less simple embodiment, the calculator 33 takes care of these decisions. In a complex embodiment, the calculator 33 calculates the parameter p₂ as a function of the parameter p₁, and possibly as a function of further input signals, such as for example a modem mode and a modem time etc. By adjusting the parameter p₂ in response to a detection of the parameter p₁, the chance on network congestion in the first network 4 is reduced or even avoided. The minimum value bₘᵢₙ and the maximum value bₘₐₓ are for example communicated in a synchronisation mode through prior art rate negotiations.

Of course, in a similar way, the chance on network congestion in the second network 5 can be reduced or even avoided, by using the second detector 34, the second calculator 36 and the second adjustor 35. Further, other modems than DSL modems may be used, such as for example cable modems, analog modems and integrated digital network modems. In that case, the network-units 40-42 will comprise other multiplexers. The modem 1 according to the invention may form part of the second network 5, coupled to or integrated into for example the device 50, and may form part of the first network 4, coupled to or integrated into for example the network-unit 40. However, usually, the modem 1 according to the invention, to reduce the chance on network congestion in the first network 4, will form part of the second network 5, and will communicate with the first network 4 comprising a prior art modem which does not need to be adapted.

In Fig. 1, the switching circuit 2 is a prior art circuit such as for example a modem chip. The controlling circuit 3 comprises the processor system 30 for example comprising a processor with a memory, and further comprises according to the invention the first (second) detector 31 (34), the first (second) adjustor 32 (35) and the first (second) calculator 33 (36). Of course, these units 31-33 (34-36) may be integrated into the processor system 30. Further, it is not to be excluded, that the controlling circuit 3 and the switching circuit 2 will be integrated. So, the first (second) detector 31 (34), the first (second) adjustor 32 (35) and the first (second) calculator 33 (36) may be hardware, software or a mixture of both. Instead of adjusting parameters via the coupler 20, they may alternatively be adjusted via the transmitter 22 (24). The calculator 33 (36) may be coupled to the transmitter 22 (24) for calculation purposes, for example to take into account previous transmitted second data.

In view of Fig. 1-4, a more particular analysis may be made, for example to define the minimum value bₘᵢₙ and the maximum value bₘₐₓ. The modem and method according to the invention are based on tracking the actual downstream bitrate in the modem, and regulating the actual upstream bitrate such that it will never be higher than (a) a guaranteed upstream bitrate, or (b) an actual downstream bitrate (whatever is higher, and limited to the upstream line rate). To overcome the situation occurring when the downstream bitrate is zero, the DSLAM 40 or BRAS 43 communicates, in a synchronisation mode, to each DSL modem 1 a bitrate which is guaranteed in all situations. This value can be calculated based on the guaranteed upstream bitrate and the number of modems 1 competing for that bandwidth.

Thereby:
BR_{I,up} = negotiated or configured upstream bitrate on DSL line I (bₘₐₓ)
BR_{I,down} = negotiated or configured downstream bitrate on DSL line I
GBR_{I,up} = configured guaranteed upstream bitrate on DSL line I (bₘᵢₙ)
IBR_{I,up} = instantaneous upstream bitrate on DSL line I
IBR_{I,down} = instantaneous downstream bitrate on DSL line I
(maximum, assuming best effort traffic sources try to send as much as possible).

According to the invention, the value of IBR_{I,up} that avoids upstream congestion is such that GBR_{I,up} ≤IBR_{I,up} ≤IBR_{I,down} (and IBR_{I,up} ≤BR_{I,up}). This can be derived from the following discussion under the following assumptions:
- The upstream bitrate (physical or configured) on the access link is less than or equal to the downstream bitrate (physical or configured) on that access link: BR_{I,up} ≤ BR_{I,down} for all I;
- Except for the access lines, all network links have a symmetric bandwidth characteristic.

The first assumption implies the following: ∑_{I}BR_{I,up} ≤∑_{I}BR_{I,down}. BR_{bottleneck} = bandwidth available on the link where the biggest bottleneck occurs. In other words, it represents the bottleneck in the network that, if taken into account by the downstream hierarchical scheduler method which guarantees congestion free downstream traffic, will result in a congestion free network. The following therefore holds: Σ_{I}IBR_{I,down} ≤BR_{bottleneck} (1).
Depending on IBR_{I,up} congestion may or may not occur. Given the symmetry of the network links and the first assumption, the goal is therefore that Σ_{I}IBR_{I,up} ≤ BR_{bottleneck} (2). Three cases are possible:
- Case A: Σ_{I}BR_{I,up} ≤Σ_{I}BR_{I,down} ≤BR_{bottleneck}
- Case B: Σ_{I}BR_{I,up} ≤BR_{bottleneck} ≤Σ_{I}BR_{I,down}
- Case C: BR_{bottleneck} ≤Σ_{I}BR_{I,up} ≤_{I}BR_{I,down}

Case A: In the downstream direction, the maximum downstream bitrate can be achieved, i.e. IBR_{I,down} = BR_{I,down}. When making the sum over all I and applying the assumption of Case A, ΣI_{I}BR_{I,down} = Σ_{I}BR_{I,down} ≤BR_{bottleneck}, which is in line with (1). Similarly, in the upstream direction, the maximum upstream bitrate can be achieved, i.e. IBR_{I,up} = BR_{I,up}. When making the sum over all I and applying the assumption of Case A with the assumption that all links in the aggregation network are symmetric, Σ_{I}IBR_{I,up} = Σ_{I}BR_{I,up} ≤BR_{bottleneck}, which meets the goal (2).
Case B: In the downstream direction, a bottleneck is present. As a result, IBR_{I,down} ≤BR_{I,down}. In the upstream direction, the maximum upstream bitrate can be achieved, i.e. IBR_{I,up} = BR_{I,up}, using the same argumentation of Case A.
Case C: Both in the downstream and upstream direction, a bottleneck is present. The goal (2) can be achieved by making sure that IBR_{I,up} ≤IBR_{I,down} (and of course the instantaneous upstream bitrate will be smaller than the negotiated or configured upstream bitrate). When making the sum over all I and combining with (3), the result is: Σ_{I}IBR_{I,up} ≤IBR_{I,down} ≤BR_{bottleneck}.

This implies that the instantaneous upstream bitrate on DSL line I may vary overtime, due to variations in the instantaneous downstream bitrate on DSL line I. Once the instantaneous downstream bitrate on DSL line I is known, the modem knows at what rate it may send without causing upstream congestion. A mechanism needs to be built in the DSL modem that can approximate IBR_{I,down}, in order to determine the limit for IBR_{I,up}.

IBR_{I,down} may also contain a portion of low priority traffic (best effort) as well as high priority traffic (relative QoS traffic and/or guaranteed QoS traffic, fixed for the finite duration of the service). If the DSL modem has a means to find out the resources that were reserved for guaranteed QoS traffic in the downstream direction, then it can safely send that amount of traffic in the upstream direction. This could be used for symmetric services (e.g. a VoIP call), but also for asymmetric services (video on demand reservation implies that one can send an amount of upstream traffic equal to the downstream reservation).

If no downstream traffic is available (e.g. no downloads taking place and no VoIP or VoD services running), then if upstream best effort traffic needs to be sent, congestion can still be avoided by using the guaranteed upstream bitrate. This is the non-oversubscribed bandwidth calculated based on the guaranteed upstream bitrate in the access network and the number of DSL modems competing for that bandwidth. The modem will then send at a rate of GBR_{I,up} which is this guaranteed upstream bitrate.

The expression "for" in for example "for receiving", "for transmitting", "for detecting", "for adjusting" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

The steps of receiving, transmitting, detecting, adjusting etc. do not exclude further steps, such as for example, inter alia, the steps as described for Fig. 1-4.

## Claims

1. Modem (1) for coupling a network-unit (40) to a device (50) and comprising a receiver (21) for receiving first data from the network-unit (40) and a transmitter (22) for transmitting second data to the network-unit (40), which first data is destined for the device (50) and which second data originates from the device (50), **characterised in that** the modem (1) comprises a detector (31) for detecting at least one parameter (p₁) comprising a bit rate of the first data, said parameter being indicative of the likelihood of future network congestion, and an adjustor (32) for, in response to a detection result, adjusting at least one parameter (p₂) of the second data for reducing said likelihood.

2. Modem (1) as defined in claim 1, **characterised in that** the modem (1) further comprises a calculator (33) for calculating the at least one parameter (p₂) of the second data as a function of the at least one parameter (p₁) of the first data.

3. Modem (1) as defined in claim 1 or 2, **characterised in that** the at least one parameter (p₂) of the second data comprises a bitrate.

4. Modem (1) as defined in claim 1, 2 or 3, **characterised in that** the modem (1) comprises a synchronisation mode for exchanging synchronisation information and a data exchangement mode for exchanging the first and second data and for detecting the at least one parameter (p₁) of the first data and for adjusting the at least one parameter (p₂) of the second data.

5. Modem (1) as defined in claim 1, 2 or 3, **characterised in that** the at least one parameter (p₂) of the second data is equal to or larger than a minimum value (bₘᵢₙ).

6. Modem (1) as defined in claim 1, 2 or 3, **characterised in that** the at least one parameter (p₂) of the second data is equal to or smaller than a maximum value (bₘₐₓ).

7. Modem (1) as defined in claim 1, 2 or 3, **characterised in that** the at least one parameter (p₂) of the second data is made substantially equal to the at least one parameter (p₁) of the first data.

8. Modem (1) as defined in claim 1, 2 or 3, **characterised in that** the at least one parameter (p₂) of the second data is made substantially equal to the at least one parameter (p₁) of the first data between a minimum value (bₘᵢₙ) and a maximum value (bₘₐₓ).

9. Network-element comprising a modem (1) according to claim 1 for coupling a network-unit (40) to a device (50).

10. Device (50) comprising a modem (1) according to claim 1 for coupling the device (50) to a network-unit (40).

11. Method for coupling a network-unit (40) to a device (50) and comprising the steps of receiving first data from the network-unit (40) and transmitting second data to the network-unit (40), which first data is destined for the device (50) and which second data originates from the device (50), **characterised in that** the method comprises the steps of detecting at least one parameter (p₁) comprising a bit rate of the first data, said parameter being indicative of the likelihood of future network congestion, and, in response to a detection result, adjusting at least one parameter (p₂) of the second data for reducing said likelihood.

12. Processor program product for coupling a network-unit (40) to a device (50) and comprising the functions of receiving first data from the network-unit (40) and transmitting second data to the network-unit (40), which first data is destined for the device (50) and which second data originates from the device (50), **characterised in that** the processor program product comprises the functions of detecting at least one parameter (p₁) comprising a bit rate of the first data and, said parameter being indicative of the likelihood of future network congestion, and in response to a detection result, adjusting at least one parameter (p₂) of the second data for reducing said likelihood.

## Patentansprüche

1. Modem (1) zum Koppeln einer Netzwerkeinheit (40) an ein Gerät (50) und umfassend einen Empfänger (21) zum Empfangen erster Daten von der Netzwerkeinheit (40) und einen Sender (22) zum Senden zweiter Daten an die Netzwerkeinheit (40), deren erste Daten für das Gerät (50) bestimmt sind und deren zweite Daten vom Gerät (50) kommen, **dadurch gekennzeichnet, daß** das Modem (1) einen Detektor (31) zum Detektieren mindestens eines Parameters (p₁) umfaßt, umfassend eine Bitrate der ersten Daten, wobei der Parameter indikativ für die Wahrscheinlichkeit zukünftiger Netzüberlastung ist, und einen Einsteller (32) zum Einstellen, als Reaktion auf das Detektionsergebnis, mindestens eines Parameters (p₂) der zweiten Daten, um die Wahrscheinlichkeit zu verringern.

2. Modem (1) nach Anspruch 1, **dadurch gekennzeichnet, daß** das Modem (1) außerdem einen Rechner (33) zum Berechnen des mindestens einen Parameters (p₂) der zweiten Daten als Funktion mindestens des einen Parameters (p₁) der ersten Daten umfaßt.

3. Modem (1) nach Anspruch 1 oder 2, **dadurch gekennzeichnet, daß** der mindestens eine Parameter (p₂) der zweiten Daten eine Bitrate umfaßt.

4. Modem (1) nach Anspruch 1, 2 oder 3, **dadurch gekennzeichnet, daß** das Modem (1) einen Synchronisationsmodus zum Austauschen von Synchronisationsinformationen und einen Datenaustauschmodus zum Austauschen der ersten und zweiten Daten und zum Detektieren mindestens eines Parameters (p₁) der ersten Daten und zum Einstellen mindestens eines Parameters (p₂) der zweiten Daten umfaßt.

5. Modem (1) nach Anspruch 1, 2 oder 3, **dadurch gekennzeichnet, daß** der mindestens eine Parameter (p₂) der zweiten Daten gleich oder größer als ein Mindestwert (bₘᵢₙ) ist.

6. Modem (1) nach Anspruch 1, 2 oder 3, **dadurch gekennzeichnet, daß** der mindestens ein Parameter (p₂) der zweiten Daten gleich oder kleiner als ein Höchstwert(bₘₐₓ) ist.

7. Modem (1) nach Anspruch 1, 2 oder 3, **dadurch gekennzeichnet, daß** der mindestens eine Parameter (p₂) der zweiten Daten im Wesentlichen dem mindestens einen Parameter (p₁) der ersten Daten gleichgesetzt ist.

8. Modem (1) nach Anspruch 1, 2 oder 3, **dadurch gekennzeichnet, daß** der mindestens eine Parameter (p₂) der zweiten Daten im Wesentlichen dem mindestens einen Parameter (p₁) der ersten Daten zwischen einem Mindestwert (bₘᵢₙ) und einem Höchstwert (bₘₐₓ) gleichgesetzt ist.

9. Netzwerkelement, umfassend ein Modem (1) nach Anspruch 1 zum Koppeln einer Netzwerkeinheit (40) an ein Gerät (50).

10. Gerät (50), umfassend ein Modem (1) nach Anspruch 1 zum Koppeln des Geräts (50) an eine Netzwerkeinheit (40).

11. Verfahren zum Koppeln einer Netzwerkeinheit (40) an ein Gerät (50) und umfassend die Schritte des Empfangens erster Daten von der Netzwerkeinheit (40) und des Sendens zweiter Daten an die Netzwerkeinheit (40), deren erste Daten für das Gerät (50) bestimmt sind, und deren zweite Daten vom Gerät (50) kommen, **dadurch gekennzeichnet, daß** das Verfahren die Schritte des Detektierens mindestens eines Parameters (p₁) umfaßt, umfassend eine Bitrate der ersten Daten, wobei der Parameter indikativ für die Wahrscheinlichkeit zukünftiger Netzüberlastung ist, und, als Reaktion auf das Detektionsergebnis, des Einstellens mindestens eines Parameters (p₂) der zweiten Daten, um die Wahrscheinlichkeit zu verringern.

12. Prozessorprogrammprodukt zum Koppeln einer Netzwerkeinheit (40) an ein Gerät (50) und umfassend die Funktionen des Empfangens erster Daten von der Netzwerkeinheit (40) und des Sendens zweiter Daten an die Netzwerkeinheit (40), deren erste Daten für das Gerät (50) bestimmt sind, und deren zweite Daten vom Gerät (50) kommen, **dadurch gekennzeichnet, daß** das Prozessorprogrammprodukt die Funktionen des Detektierens mindestens eines Parameters (p₁) umfaßt, umfassend eine Bitrate der ersten Daten, wobei der Parameter indikativ für die Wahrscheinlichkeit zukünftiger Netzüberlastung ist, und, als Reaktion auf das Detektionsergebnis, des Einstellens mindestens eines Parameters (p₂) der zweiten Daten, um die Wahrscheinlichkeit zu verringern.

## Revendications

1. Modem (1) pour connecter une unité de réseau (40) à un dispositif (50) et comprenant un récepteur (21) pour recevoir des premières données de la part de l'unité de réseau (40) et un émetteur (22) pour émettre des deuxièmes données vers l'unité de réseau (40), lesdites premières données étant destinées au dispositif (50) et lesdites deuxièmes données provenant du dispositif (50), **caractérisé en ce que** le modem (1) comprend un détecteur (31) pour détecter au moins un paramètre (p₁) comprenant un débit binaire des premières données, ledit paramètre indiquant la probabilité d'un futur encombrement du réseau, et un dispositif de réglage (32) pour, en réponse au résultat d'une détection, ajuster ledit au moins un paramètre (p₂) des deuxièmes données en vue de réduire ladite probabilité.

2. Modem (1) selon la revendication 1, **caractérisé en ce que** le modem (1) comprend en plus un calculateur (33) pour calculer l'au moins un paramètre (p₂) des deuxièmes données en fonction de l'au moins un paramètre (p₁) des premières données.

3. Modem (1) selon la revendication 1 ou 2, **caractérisé en ce que** l'au moins un paramètre (p₂) des deuxièmes données comprend un débit binaire.

4. Modem (1) selon la revendication 1, 2 ou 3, **caractérisé en ce que** le modem (1) comprend un mode de synchronisation pour échanger des informations de synchronisation et un mode d'échange de données pour échanger les premières et deuxièmes données et pour détecter l'au moins un paramètre (p₁) des premières données et pour ajuster l'au moins un paramètre (p₂) des deuxièmes données.

5. Modem (1) selon la revendication 1, 2 ou 3, **caractérisé en ce que** l'au moins un paramètre (p₂) des deuxièmes données est égal ou supérieur à une valeur minimale (bₘᵢₙ).

6. Modem (1) selon la revendication 1, 2 ou 3, **caractérisé en ce que** l'au moins un paramètre (p₂) des deuxièmes données est égal ou inférieur à une valeur maximale (bₘₐₓ).

7. Modem (1) selon la revendication 1, 2 ou 3, **caractérisé en ce que** l'au moins un paramètre (p₂) des deuxièmes données est rendu sensiblement égal à l'au moins un paramètre (p₁) des premières données.

8. Modem (1) selon la revendication 1, 2 ou 3, **caractérisé en ce que** l'au moins un paramètre (p₂) des deuxièmes données est rendu sensiblement égal à l'au moins un paramètre (p₁) des premières données entre une valeur minimale (bₘᵢₙ) et une valeur maximale (bₘₐₓ).

9. Élément de réseau comprenant un modem (1) selon la revendication 1 pour connecter une unité de réseau (40) à un dispositif (50).

10. Dispositif (50) comprenant un modem (1) selon la revendication 1 pour connecter le dispositif (50) à une unité de réseau (40).

11. Procédé pour connecter une unité de réseau (40) à un dispositif (50) et comprenant les étapes de réception de premières données de la part de l'unité de réseau (40) et d'émission de deuxièmes données vers l'unité de réseau (40), lesdites premières données étant destinées au dispositif (50) et lesdites deuxièmes données provenant du dispositif (50), **caractérisé en ce que** le procédé comprend les étapes de détection d'au moins un paramètre (p₁) comprenant un débit binaire des premières données, ledit paramètre indiquant la probabilité d'un futur encombrement du réseau, et, en réponse au résultat d'une détection, d'ajustage dudit au moins un paramètre (p₂) des deuxièmes données en vue de réduire ladite probabilité.

12. Programme de processeur pour connecter une unité de réseau (40) à un dispositif (50) et comprenant les fonctions de réception de premières données de la part de l'unité de réseau (40) et d'émission de deuxièmes données vers l'unité de réseau (40), lesdites premières données étant destinées au dispositif (50) et lesdites deuxièmes données provenant du dispositif (50), **caractérisé en ce que** le programme de processeur comprend les fonctions de détection d'au moins un paramètre (p₁) comprenant un débit binaire des premières données, ledit paramètre indiquant la probabilité d'un futur encombrement du réseau, et, en réponse au résultat d'une détection, d'ajustage dudit au moins un paramètre (p₂) des deuxièmes données en vue de réduire ladite probabilité.
